# EUROPEAN PATENT SPECIFICATION

(11) **EP 3 323 178 B1**
(45) Date of publication and mention of the grant of the patent: **19.02.2020**
(21) Application number: 16757814.5
(22) Date of filing: 15.07.2016
(51) Int. Cl.: H01S 3/06, H01S 3/16, H01S 3/23

(54) **OPTICAL ELEMENTS FOR CONSTRUCTING PERFORMANCE LASER SYSTEMS AND THEIR PREPARATION**
OPTISCHE ELEMENTE ZUR HERSTELLUNG VON LASERLEISTUNGSSYSTEMEN UND DEREN HERSTELLUNG
ÉLÉMENTS OPTIQUES PERMETTANT DE CONSTRUIRE DES SYSTÈMES LASER PERFORMANTS, ET LEUR PRÉPARATION

(30) Priority: 16.07.2015 CZ 20150501
(43) Date of publication of application: 23.05.2018
(73) Proprietor: Fyzikální ústav AV CR, v.v.i., 18221 Praha 8 (CZ)
(72) Inventor: KOSELJA, Michal, 25241 Dolni Brezany (CZ)
(86) International application number: PCT/CZ2016/050026
(87) International publication number: WO 2017/008774

(56) References cited:
- WO-A1-2004/027943
- BELOUET ET AL: "About the crystalline perfection of Nd-doped YAG single crystals", JOURNAL OF CRYSTAL GROWTH, ELSEVIER, AMSTERDAM, NL, vol. 15, no. 3, 1 August 1972 (1972-08-01) , pages 188-194, XP024429512, ISSN: 0022-0248, DOI: 10.1016/0022-0248(72)90118-2 [retrieved on 1972-08-01]

## Description

### Technical Field

This invention relates to the preparation of solid-state optically active medium (monocrystalline in particular) with added optically active centres (dopants) and their use in constructing performance optical amplifiers (especially laser systems) and their components (e.g. saturable absorber).

### Background Art

Besides others, the materials prepared by a controlled crystallization from a melt or solution which contain other ingredients in addition to the structural elements constituting the crystal structure of a given crystal are used for the preparation of the active optical elements. These are used to form the optically active centres which, while in interaction with various types of radiation, corpuscular and/or electromagnetic in nature, absorb the energy and subsequently emit or convert it into other optically active centres emitting it in the form of photons. Emitted photons can be further used/processed or detected.

The achievable size of the monocrystalline optical elements with optically active centres is limited by the nature of their production. It is common for a concentration gradient of impurities constituting the optically active centres (as well as dopants) in the direction of the crystallization front to be created during crystallization. This phenomenon is caused by a change in a concentration of the proportion of both crystal-making and impurity elements in the melt or solution during the crystallization and hence in the resulting crystal. This phenomenon is due to the different sizes of blend element radiuses or their ions from the crystal-making.

If the radius of an impurity element is greater than the radius of a structural element, its ability to participate in crystal-making process is smaller, providing a gradual build-up of the impurity element concentration in the solution/melt which the crystal continues to grow from. This effect results in a gradual increase in the concentration of the impurity element in the growing crystal in the direction of its growth. In case of a smaller radius, there is an opposite effect. The impurity element concentration in the melt or solution decreases during the crystallization and thus the impurity element concentration in the growing crystal decreases in the direction of its growth. Changing the concentration of dopant during the crystal growth is crucial - greater than 5%.

All industrially used industrial crystallization technologies (such as Czochralski, Kyropoulos, Bridgman, Bagdasarov, HEM (Heat Exchange Method), CRIG (CRystal Improved Growth) and others) for the preparation of high-temperature monocrystals (such as neodymium-doped yttrium aluminium garnet (Nd:YAG - Nd3+:Y3AI5012), titanium-doped sapphire (Ti:S - Ti3+:Al2O3 and others), ytterbium-doped calcium difluoride (Yb:CaF - Yb3+:CaF2 and others) exhibit the above-mentioned phenomena.

In some cases (according to the used growth technology), the concentration gradient of impurity elements in a monocrystal is also affected by a transverse distance from the crystal axis. Generally, the concentration gradient direction is always perpendicular to the crystallization front. In case of a flat crystallization front, the direction of the concentration gradient of dopants then corresponds to the axis of growth, in case of a rotationally symmetrical crystallization front having a shape of a cone surface with top angle ε ≠ 180°, the direction of crystal growth is identical to the rotational axis of the cone and the concentration gradients of dopants are directed in the growth axis as well as perpendicular to this axis.

In practice, there is the transverse concentration difference of ± 5% of optically active centres to the desired concentration acceptable for the production of optical, particularly laser, elements. Therefore, the previously mentioned facts show that an uneven distribution of dopants set by the crystallization process is usually limiting for the production of optical elements according to the existing technologies.

The size of optical, particularly laser, elements with desired properties imposed upon the particular optically active centres of the thus grown monocrystal is, according to the existing technologies, limited by two factors:
1. the overall dimensions of grown monocrystals;
2. the size of the volume satisfying the condition of optical homogeneity - the concentration gradients significantly limit the usable parts of these monocrystals, while it is essential to select an area which satisfies the condition of the maximum transverse difference of the dopant concentration gradient of ± 5% for the production of optical, particularly laser, element.

The preparation process of optical, particularly laser, elements and their geometric arrangement for use according to the invention allows exceeding these limiting conditions related to the existence of concentration gradients of optically active elements (dopants), thereby significantly increasing their usable area. The usable area of active optical elements is one of the major factors limiting the performance of optical amplifiers, especially the performance laser systems.

Document WO2004027943 relates to an optically pumped solid laser comprising at least one intracavitarily arranged laser crystal, which comprises at least one optical axis along which a pumped light beam is directed into the laser crystal said pumped light beam being emitted from at least one light source in a continuous and pulsed manner and which contains dopants absorbing the pump light beam. The laser crystal comprises at least two areas which are spatially arranged at a distance from each other in the direction of the optical axis, said areas being provided with various concentrations of dopant. This solution, however, does not solve problem connected with thin laser discs.

Non-patent literature BELOUET ET AL, "About the crystalline perfection of Nd-doped YAG single crystals", JOURNAL OF CRYSTAL GROWTH, ELSEVIER, AMSTERDAM, NL, vol. 15, no. 3, doi:10.1016/0022-0248(72)90118-2, ISSN 0022-0248, (19720801), pages 188 - 194, relates to preparation of a crystalline suitable for a laser discs.

### Summary of Invention

The invention relates to a pair of active optical elements with the concentration gradient of the optically active centres, a process of its preparation and its use for producing a material with an eliminated inhomogeneity for the preparation of large area optical elements, a method of its preparation and then an active optical element equipment, particularly an optical amplifier, absorber or detector using the geometric arrangement of this pair of active optical elements.

According to an object of the present invention, it is provided a pair of active optical elements wherein
- each of the pair elements has a concentration gradient of optically active centres over an acceptable level of optical homogeneity, wherein the concentration gradient is parallel to a surface of the optical element configured to transmit and/or reflect an optical beam; and
- said elements are mutually mirror and/or rotationally symmetrical in shape and in the distribution of concentration gradient of the optically active centres at least in the surface and/or volume intended for reflection and/or passage of an optical beam, wherein during the reflection at the pair elements and/or the passage through the pair elements, the optical beam is directed such that the sum of optically active centres of the pair elements across the cross-section of the optical beam reaches a maximum concentration difference of ± 5% at all points in the cross section of the optical beam resulting in an acceptable level of optical homogeneity.

The pair of active optical elements of the same material which are mutually mirror and/or rotationally symmetrical in term of the geometrical shape and distribution of the concentration gradient of optically active centres at least in the area/volume intended for reflection/passing of an optical beam.

Using the pair of active optical elements according to the invention for preparing a composite material with an eliminated inhomogeneity of concentration gradient of optically active centres.

Using the pair of active optical elements according to the invention as an active optical medium in an optical element. This element may be any active optical element according to the existing technology, such an optical amplifier or a saturable absorber or an optical detector.

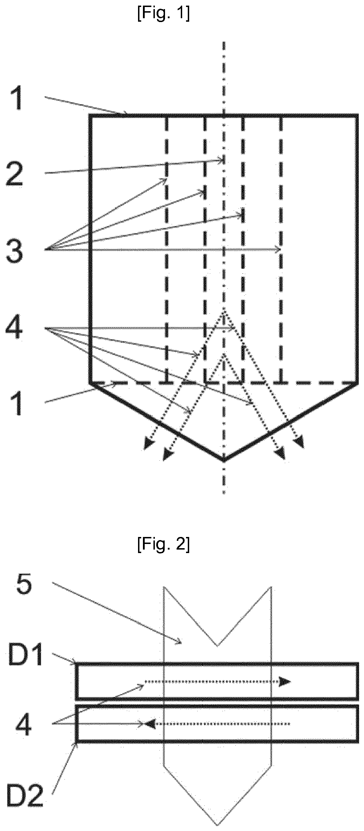

Preparing the pair of active optical elements according to the invention from a starting material which comprises at least one field of mirror and/or rotationally symmetrical concentration gradient of dopants by one axis and there was simultaneously a change in the dopant concentration gradient along this axis. The preparation further consists in:
1. The starting material is reduced in the direction of the symmetry axis of the dopant concentration gradient to the desired length and fitted with inspection ends.
2. Two mirror-symmetrical parts are selected from the material volume, wherein the parts do not exhibit optical defects seen by the naked eye or with the aid of crossed polarizers. Thus, the suitable areas having sufficient optical homogeneity are identified.
3. At least two geometric shapes satisfying the condition of mirror and/or rotational symmetry (Fig. 1) are made by at least three mutually parallel sections guided in a direction parallel to the symmetry axis, wherein the mean section, or the median plane between the mean sections represent the geometric place of the mirror and/or rotational symmetry of the material as well as the very mean sections represent the geometric place of the mirror and/or rotary symmetry.
4. The dimensions and the surface of thus made geometric shapes are then adjusted by known methods in the field into the optical quality according to their further use, and all shapes shall have a mutual symmetry relative to the normal of mirror or rotational symmetry surfaces even after the treatment.

In a preferred embodiment and by the preparation process of the invention, the pair of optical elements is prepared from a monocrystal produced by the method of crystallization which exhibits a one-way process of crystallization from the melt or solution containing, besides the crystal-making components, other ingredients to form the optically active centres. The thus prepared monocrystal exhibits the concentration gradient in the growth direction of this monocrystal. The symmetry axis is identical with the axis of the monocrystal growth.

In a preferred embodiment, the pair of optical elements is prepared from a monocrystal which is optically isotropic (e.g., YAG, LuAG, etc.) or optically uniaxial (e.g. sapphire Al₂O₃, etc.) and which comprises optically active centres formed by rare-earth ions (e.g. Nd, Ce, Pr, Tm, etc.) and/or transition metals (e.g. Cr, Ti, V, etc.) having a concentration gradient in the direction of the crystal growth. Composite homogeneous material for the producing especially large optical elements, particularly laser slabs, which is formed by at least one pair of active optical elements having the concentration gradient of optically active elements according to the invention, and the individual elements of the pair are mutually rotated by 180° by a common axis perpendicular to the direction of the concentration gradient of optically active centres and subsequently optically connected.

Thus prepared material may be advantageously used for the preparation of large active optical elements, particularly laser slabs, which are further used in performance laser systems to provide them with a substantial increase in the achievable capacity. The composite material can be processed by technologies common for the field.

A method for preparing the composite homogeneous material for producing especially large optical elements, particularly laser slabs of at least one pair of active optical elements having the concentration gradient of optically active elements consisting in one element of the pair being rotated relative to the other along a common axis perpendicular to the direction of the concentration gradient of optically active centres by 180° and then both elements of the pair being optically connected using technologies common for the field.

The active optical element, particularly the optical amplifier, optical absorber or radiation detector comprises at least one pair of active optical elements according to the invention which are geometrically arranged in the direction of at least one passing-through optical beam so that the sum of the values of dopant concentration gradients reaches the values corresponding to a margin for optical homogeneity in the direction of passing/reflecting optical beam at all points in the cross-section of the beam. This condition is met if the elements are arranged in space so that they are mutually centrosymmetric (simple and) or mirrored.

In a preferred embodiment, the active optical element comprises at least one pair of active optical elements according to the invention, wherein the elements of this pair are rotatable pivoted around a section surface normal so that their concentration gradients are counter-wise. They are arranged in the space in the passing optical beam direction so that a location of common rotation axis of the two elements is retained, i.e. the axes of the two mutually parallel surfaces are identical while corresponding to the same rotation axis (Fig. 2).

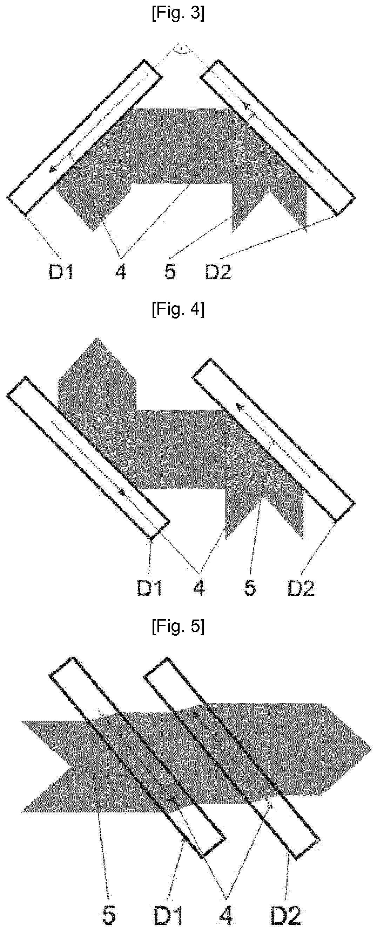

In another preferred embodiment, the active optical element comprises at least one pair of active optical elements, according to the invention, wherein the elements of this pair are geometrically arranged in space so that they form the right angle (Fig. 3) and their spatial arrangement meets the condition of the inverted mirror symmetry of both pair elements at the same time. The concentration gradient of one of the discs leads to the top of the right angle; the second disc is oriented so that the concentration gradient is facing away from the top of the right angle. Thus arranged discs form the active medium of the optical amplifier and they can preferably be taken from the rear side. At least one passing optical beam is oriented parallel to the geometric axis of the angle formed by both elements.

In another preferred embodiment of the active optical element, the elements of at least one pair of active optical elements according to the invention are geometrically arranged so that the normals of corresponding surfaces are parallel to each other while meeting the condition of centrosymmetric orientation of dopant concentration gradient according to the invention. At least one passing optical beam is directed towards one of the surfaces which normals are parallel, at an angle which ranges from 22° to 75° relative to the normal of each of the surfaces (Fig. 4 or Fig. 5).

A special embodiment of the previous case is when at least one optical beam passing through at least one pair of active optical elements arranged so that the normals of corresponding surfaces are parallel to each other while meeting the condition of centrosymmetric orientation of dopant concentration gradient according to the invention is directed towards at least one surface which normals are directed from each other under the Brewster angle and gradually pass through the volume of at least one pair of active optical elements (Fig. 5).

The active optical element containing any combination of geometric arrangements of the pairs of active optical elements according to the invention which are described above.

According to the invention, the active optical element may be a saturable absorber, large and/or long radiation detector or a laser amplifier.

### Brief Description of Drawings

The invention will be approached through the drawings:
**Fig.1** represents an example of sections to prepare a pair of active optical elements according to the invention in case of a crystal with the central optical inhomogeneity.
**Fig.2** represents a geometric arrangement of mirror-symmetrical panels according to Example 2.
**Fig. 3** represents a geometric arrangement of mirror-symmetrical panels according to Example 4.
**Fig. 4** represents a geometric arrangement of mirror-symmetrical panels and an orientation of optical beam according to Example 5.
**Fig. 5** represents a geometric arrangement of mirror-symmetrical panels and an orientation of optical beam according to Example 6.

### Description of Embodiments

### Examples

### Example 1

A YAG crystal grown by Czochralski method with a diameter of 80 mm with a conical (cone) crystallizing front of a vertex angle of 120° has been grown in the orientation <111> with a total length of 150 mm. Trivalent neodymium ion (Nd³⁺) which is commonly used for making laser materials has been selected as the optically active centres. By removing the beginning and end of the crystal and polishing its surfaces, a crystal with 120 mm ling inspection ends 1 has been made. The dopant concentration is 0.9 at% of Nd ions in the upper part and 1.04 at% Nd ions at the bottom. The average concentration gradient **4** of Nd ions is 0.0117 at% per 1 cm. During a visual inspection, a central inhomogeneity in the shape of an equilateral triangle with sides of 4 mm is identified. Other optical inhomogeneities interfering radially towards the centre of the crystal to a depth of 5 mm are recorded on the outer edges of the crystal with inspection ends **1.**

In case of a conventional process for producing a laser element in the shape of a disc, while maintaining the condition of the same average value of Nd ions, a radial section must be kept perpendicular to the crystal growth axis **2.** The maximum diameter of the laser disk is 33 mm, i.e. the total area is 8.55 cm². According to the selection of a crystal part which the laser element is produced from, the average concentration of Nd ions can range from 0.93at% to 1.00at%.

The method according to the invention is used to produce two laser elements **D1** and **D2,** which meet the condition of maintaining an average Nd ion concentration by cutting out two mirror-symmetrical panels using at least two chord sections **3** run outside the central cords in the mutual arrangement in the active optical element according to the invention (Fig. 1). The panel thickness is variable according to the requirements. When the panel thickness is 5 mm, the length of the outer chord will be 65 mm.

Both panels are then mutually rotated by 180° along the normal of section **3** surfaces and put on each other so that the two opposing surfaces form an optical contact. Using the method according to the invention, we have prepared the composite material which exhibits a homogeneous average concentration of Nd ions of 0.97 at% in the entire area. The panel composite material prepared in this way can be subsequently use to make three different types of optical active elements, particularly laser slabs:
1. Laser element in a shape of a rectangle with sides of 6.5 cm and 12 cm has the largest area. Thus, the total area is 78 cm².
2. Laser element of circular shape with a diameter of 6.5 cm with the total surface area of 33.18 cm². Ideally, another laser element of smaller dimensions can be produced from the remaining part of the panel material, thus significantly increasing the effective yield of the material.
3. Square laser element with the sides of 6.5 cm; total area is 42.25 cm². Ideally, another laser element of smaller dimensions can be produced from the remaining part of the panel material.
4. In all cases, the laser elements are shaped into their final forms and quality using methods common for the field.

When comparing the achievable area size of laser elements of circular cross section, we see that the usable area is increased nearly 3.9 times when the grown monocrystal has the same sizes and using the process according to the invention. In case of using the maximum area size of a preparable laser element, the area is increased 9.12 times. The thus manufactured discs **D1** and **D2** have a significant role for the construction of more efficient amplifiers.

### Example 2

CaF₂ crystal grown by Bridgman method with optically active centres formed by Yb³⁺ ions of cylindrical shape with a diameter of 150 mm and a length of 200 mm. No growth defects were identified during an optical inspection. Due to the different sizes of ytterbium and calcium ions, the grown crystal exhibits a concentration gradient **4** perpendicular to the crystallization front. It is perpendicular to the rotation axis which is identical with the grown axis **2.**

With a traditional method of preparing laser elements while meeting the acceptable homogeneity of the optically active centre distributions of produced laser slabs, the maximum diameter size of the basic material up to 145 mm with a thickness of up to 20 mm can be achieved. Subsequently, the laser element with a total area of 105.1 cm² (square cross section) to 227.8 cm² (circular cross section) can be prepared from this semi-finished product.

When using the method according to the invention, the laser element can be prepared by keeping at least three mutually parallel sections 3 run parallel to the crystal growth axis 2 and subsequently shaping it into the optical quality of the conventional methods. The total achievable surface of each element is up to 290 cm², corresponding to 127% increase in the achievable size of the laser element active area.

To use the pair of active optical elements **D1** and **D2** in the active optical element according to the invention, turn both elements of a pair of symmetrical discs by 180° along the normal of section surfaces **3** and preserve the location of the common rotation axis of the two surfaces, i.e. the axes of the two mutually parallel surfaces are identical and correspond to the rotation axis (Fig. 2). At least one optical beam **5** is then run parallel to the rotation axis, creating its amplifying within a gradual passage through the two pair elements.

### Example 3

Sapphire monocrystal with optically active centres if titanium ions grown by HEM (Heat Exchange Method), of cylindrical shape with a diameter of 250 mm and a length of 400 mm. Due to the growth technology used, it creates a rotationally symmetrical parabolic crystallization front which differs in a radius of interspersed osculating circle at the beginning and at the end of crystallization. The osculating circle radius increases with time or with progressive crystallization. It changes to infinity in a limit case, making a circle arc change to a line. Likewise, the crystallization front is gradually straightened with the progressing crystal growth.

A partition coefficient of titanium ions is equal to 0.04, resulting in a very strong concentration gradient **4** in the local direction of crystal growth. The gradient **4** direction varies also by changing the shape of the crystallization front - it always points in the direction of the normal at each site.

This is why it is required to be limited to a very narrow part of the grown crystal when using the traditional methods of producing laser elements of required dimensions and concentration. A semi-finished product for creating the laser element has to be cut out so that the section plane **3** corresponds to a tangent to the crystallization front at points representing the geometric place of the grown crystal rotation symmetry. A maximum of 20% of the original crystal weight is usually used. A laser element of circular shape with a diameter of up to 230 mm and a thickness of 25 mm maximum can be produced from the thus grown crystal. The preparable laser element area (up to 415.50 cm²) is highly dependent on the desired thickness in this case.

Using the method according to the invention, it is possible to obtain at least two elements **D1** and **D2** of the pair of active optical elements of rectangular shape with maximum dimensions of 230 mm x 380 mm which corresponds to the area of 874.00 cm², while maintaining an average titanium ion concentration over the entire surface at the geometrical arrangement of the invention. A pair of the thus prepared active optical elements **D1** and **D2** can be used both in the active optical element (particularly a laser amplifier) according to the invention and for the production of composite material for further production of laser slabs in particular. The increase in area size corresponds to twice the area achievable by current technological means.

### Example 4

Using YAG crystal which has been produced by CRIG method with neodymium optical active centres, two discs of rectangular shape with the dimensions of 80 mm x 100 mm x 10 mm were made according to the invention. Discs **D1** and **D2** are geometrically arranged so that they form the right angle (Fig. 3) while meeting the condition of the inverted mirror symmetry. The concentration gradient **4** of one of the **D1** and **D2** discs leads to the top of the right angle; the second disc is oriented so that the concentration gradient **4** is directed away from the top of the right angle. Thus arranged discs **D1** and **D2** form the active medium of the optical amplifier.

Both discs **D1** and **D2** are uniformly pumped by IR diodes from the rear side. Laser beams **5** are oriented parallel to the angle geometrical axis formed by the two discs **D1** and **D2.** The beam **5** gradually extends through both discs **D1** and **D2** and its resulting energy can be measured. By gradually measuring 80% of both discs **D1** and **D2,** it has been showed that they have not exceeded the value of 1.5%, regardless of the point of impact, the absolute deviations of pulse energy measured values, depending on the level of pumping.

Based on these results, it can be concluded that an amplification of scanning pulse after reflections on both discs **D1** and **D2** is the same within the precision of measurement; therefore the average sum of Nd ion concentrations after passage through the two discs **D1** and **D2** is also identical, thus meeting the condition according to the invention.

### Example 5

Using YAG crystal which has been produced by the method mentioned in Example 4 with neodymium optical active centres, two discs **D1** and **D2** of rectangular shape with the dimensions of 100 mm x 120 mm x 10 mm were made according to the invention. Discs **D1** and **D2** are geometrically arranged so that the normals of mutually corresponding surfaces are parallel to each other while meeting the condition of centrosymmetric orientation of dopant concentration gradient 4 according to the invention. Both discs **D1** and **D2** are equivalently pumped.

The input laser beam **5** falls on at least one of the surfaces which normals are directed towards each other at an angle ranging from 22° to 75° relative to the normal of each of the surfaces, passes/is reflected from the first disc **D1** towards the second disc **D2** where there is the second passage/reflection (Fig. 4). By measuring the surface energy of laser beam **5,** it has also been verified that the amplification occurs uniformly across its surface.

### Example 6

Two discs **D1** and **D2** prepared by the method according to the invention from a Nd:YAG crystal are geometrically arranged so that the normals of corresponding surfaces are parallel to each other while meeting the condition of centrosymmetric orientation of dopant concentration gradient **4.** Both discs **D1** and **D2** are equivalently pumped.

The input laser beam **5** falls under the Brewster angle (for laser radiation of λ=1.03µm, Bw = arctg(1/n) = 61.151°, where n is the refractive index of the given YAG crystal for the used wavelength) on at least one surfaces which normals are directed in the opposite directions (Fig. 5). Within this arrangement, the laser beam **5** passes sequentially through the two discs **D1** and **D2.** By measuring the surface energy of laser beam **5,** it has been verified that the amplification occurs uniformly across its surface.

### Industrial Applicability

The active area up to 80% of the total area of the optical element is usually used in practice. A laser element of monocrystalline material of efficient laser surface up to 32 cm² maximum can be prepared by conventional methods. By preparing and arranging the laser elements according to the invention, it is possible to achieve two - to nine fold gain as compared to the existing technical and technological condition which significantly affects the achievable performance of solid-state lasers based on monocrystalline active media.

The invention can be used in the construction of active optical elements for the design and construction of high-performance solid-state laser systems which are constructed e.g. in the project ELI Beamlines, HiLASE and other possible laser systems for further scientific, industrial, medical or other applications of laser in engineering or technology.

## Claims

1. A pair of active optical elements (D1, D2) wherein
- each of the pair elements has a concentration gradient (4) of optically active centres over an acceptable level of optical homogeneity, wherein the concentration gradient (4) is parallel to a surface of the optical element configured to transmit and/or reflect an optical beam (5); and
- said elements (D1, D2) are mutually mirror and/or rotationally symmetrical in shape and in the distribution of concentration gradient (4) of the optically active centres at least in the surface and/or volume intended for reflection and/or passage of an optical beam (5), wherein during the reflection at the pair elements and/or the passage through the pair elements, the optical beam (5) is directed such that the sum of optically active centres of the pair elements across the cross-section of the optical beam reaches a maximum concentration difference of ± 5% at all points in the cross section of the optical beam resulting in an acceptable level of optical homogeneity.

2. The pair of active optical elements (D1, D2) according to Claim 1, being used for preparing a composite material with an eliminated inhomogeneity of optically active centres concentration.

3. The pair of active optical elements (D1, D2) according to Claim 1, being used as a solid-state active medium of the optical element intended for the amplification and/or detection and/or control of the optical radiation (5).

4. A method for preparing the pair of active optical elements (D1, D2) according to Claim 1, using a starting material for their production, which comprises at least one area of mirror and/or a rotationally symmetrical concentration gradient (4) of optically active centres by at least one axis (2) while having along this at least one axis (2) the process of changing the concentration gradient (4) of optically active centres, and consequently, the preparation lies in the fact that
the starting material is reduced in direction of the symmetry axis (2) of the concentration gradient (4) of optically active centres to the desired length and fitted with inspection ends (1); mirror and/or rotationally symmetrical parts having optical homogeneity are selected from the volume of the thus treated material; at least two geometric shapes satisfying the condition of mirror and/or rotational symmetry are made by at least three mutually parallel sections (3) run in a direction parallel to the symmetry axis (2), wherein a mean section, or median plane between the mean sections (3) represents the geometric place of the mirror and/or rotational symmetry of the starting material as well as the mean section or sections represent the geometric place of the mirror and/or rotary symmetry; and the dimensions and the surface of the thus made geometric shapes are then adjusted while maintaining the condition of mutual symmetry according to Claim 1.

5. The method for preparing the pair of active optical elements (D1, D2) according to Claim 4, using as the starting material a monocrystal produced by the method of unidirectional crystallization from a melt or solution having a concentration gradient (4) in the direction of the monocrystal growth.

6. The method for preparing the pair of active optical elements (D1, D2) according to Claim 5, using as the starting material the monocrystal that is optically isotropic or optically uniaxial, and which comprises optically active centres formed by rare-earth ions and/or transition metals exhibiting the concentration gradient (4) at least in the direction of crystal growth.

7. A composite optical material comprises:
- at least one pair of active optical elements (D1, D2) with the concentration gradient (4) of optically active elements according to Claim 1;
- individual elements of the pair are mutually rotated by 180° by a common axis perpendicular to the direction of a concentration gradient (4) of optically active centres and subsequently optically connected.

8. The composite optical material according to Claim 7, being used for the production of active optical elements (D1, D2), large laser slabs in particular.

9. The method for preparing the composite optical material according to Claim 4 having at least one of the elements of at least one pair of active optical elements (D1, D2) with the concentration gradient (4) of optically active centres according to Claim 1 rotated against the second element of the pair along a common axis perpendicular to the direction of the concentration gradient (4) of optically active centres by 180° and the two components (D1, D2) of at least one pair are then optically connected.

10. An active optical element with a solid-state active medium comprises at least one pair of active optical elements (D1, D2) according to Claim 1 which are geometrically arranged centrosymmetrically or mirroring, while the sum of the values of the concentration gradients (4) of optically active centres of this at least one pair of active optical elements (D1, D2) is in the direction of at least one passing optical beam (5) at all points in the cross section of this beam (5) at an interval up to ±5% of optical homogeneity.

11. The active optical element according to Claim 10 having the elements of at least one pair of active optical elements (D1, D2) according to Claim 1 mutually rotatably pivoted around the normal of corresponding surfaces so that the concentration gradients (4) of optically active centres are counterwise and simultaneously arranged in the direction of at least one passing optical beam (5) behind each other so that the location of common rotation axis of the two elements from at least one pair of active optical elements (D1, D2) according to Claim 1 is maintained.

12. The active optical element according to Claim 10 having the elements of at least one pair of active optical elements (D1, D2) according to Claim 1 geometrically arranged to form a right angle, while there is at least one passing optical beam (5) at its entry to at least one pair of the thus geometrically arranged pair elements oriented parallel to the geometric axis of the angle formed by these elements (D1, D2).

13. The active optical element according to Claim 10 having the elements of at least one pair of active optical elements (D1, D2) according to Claim 1 geometrically arranged so that the normals of corresponding areas are mutually generally parallel, and at least one passing optical beam (5) is oriented towards one of the surfaces which normals are parallel at an angle ranging in the interval 22° to 75° relative to the normal of each surface.

14. The active optical element according to Claim 13 having at least one passing optical beam (5) oriented against at least one of the element surfaces of at least one pair of active optical elements (D1, D2) according to Claim 1 wherein normals are parallel and are directed apart, under the Brewster angle, thus gradually passing through the volume of the two elements of this at least one pair of active optical elements (D1, D2).

15. The active optical element according to anyone of Claims 10 to 14 being a part of the optical laser amplifier and/or saturable absorber and/or radiation detector.

## Patentansprüche

1. Ein Paar von aktiven optischen Elementen (D1 , D2), wobei jedes der Paarelemente einen Konzentrationsgradienten (4) von optisch aktiven Zentren über ein akzeptables Maß an optischer Homogenität aufweist, wobei der Konzentrationsgradient (4) parallel zu ist eine Oberfläche des optischen Elements, die dafür konfiguriert ist, einen optischen Strahl (5) durchzulassen und / oder zu reflektieren; und wobei die Elemente (D1 , D2) sind gegenseitig Spiegel und / oder rotationssymmetrisch ausgebildet und in der Verteilung von Konzentrationsgradienten (4) der optisch aktiven Zentren zumindest in der Oberfläche und / oder das Volumen für die Reflexion bestimmt und / oder einen Durchgang eines optischen Strahl (5), wobei während der Reflexion an den PA ir Elementen und / oder den Durchgang durch die paarweise Elemente wird der optische Strahl (5) gerichtet eine solche , dass die Summe von optisch aktiven Zentren von den Paar - Elementen über den Querschnitt des optischen Strahls eine maximale Konzentrationsdifferenz von ± 5% in allen Punkten in der Quer Schnitt des optischen Strahls ein akzeptables Maß an optischer Homogenität.

2. Das Paar von aktiven optischen Elemente (D1, D2) nach Patentanspruch 1, die ein Verbundmaterial für die Herstellung verwendet wird , mit einem eliminiert Inhomogenität von optisch aktiven Zentren-Konzentration.

3. Das Paar von aktiven optischen Elementen (D1 , D2) nach Patentanspruch 1, das als aktives Festkörpermedium des optischen Elements für die Verstärkung und/oder den Nachweis und/oder die Kontrolle der optischen Strahlung (5) verwendet wird.

4. Ein Verfahren zur Herstellung des Paars von aktiven optischen Elementen (D1 , D2) nach Patentanspruch 1, unter Verwendung eines Ausgangsmaterials zu deren Herstellung, das mindestens eine Spiegelfläche und/oder einen rotationssymmetrischen Konzentrationsgradienten (4) optisch aktiver Zentren um mindestens eine Achse (2) aufweist, wobei entlang dieser mindestens einen Achse (2) der Prozess der Veränderung der Konzentrationsgradient (4) optisch aktiver Zentren, und folglich die Präparation darin besteht, dass das Ausgangsmaterial in Richtung der Symmetrieachse (2) des Konzentrationsgradienten (4) optisch aktiver Zentren auf die gewünschte Länge reduziert und mit Inspektionsenden (1) versehen wird; aus dem Volumen des so behandelten Materials werden spiegel- und/oder rotationssymmetrische Teile mit optischer Homogenität ausgewählt; mindestens zwei geometrische Formen, die die Bedingung der Spiegel- und/oder Rotationssymmetrie erfüllen, durch mindestens drei zueinander parallele Abschnitte (3), die in einer Richtung parallel zur Symmetrieachse (2) verlaufen, hergestellt werden, wobei ein Mittelabschnitt oder eine Mittelebene zwischen den Mittelabschnitten (3) den geometrischen Ort des Spiegels und/oder die Rotationssymmetrie des Ausgangsmaterials darstellt, sowie der oder die Mittelabschnitte den geometrischen Ort des Spiegels und/oder der Rotationssymmetrie darstellen; und die Abmessungen und die Oberfläche der so hergestellten geometrischen Formen werden dann unter Beibehaltung der Bedingung der gegenseitigen Symmetrie nach Anspruch 1 angepasst.

5. Das Verfahren für das Paar der Herstellung von aktiven optischen Elementen (D1 , D2) nach Patentanspruch 4, unter Verwendung als der Start-Material eines Einkristall hergestellt durch das Verfahren von U ni Richtung al Kristallisation aus einer Schmelze oder Lösung mit einem Konzentrationsgefälle (4) in Richtung des Einkristallwachstums .

6. Das Verfahren zur Herstellung des Paars von aktiven optischen Elementen (D1 , D2) nach Patentanspruch 5, als die unter Verwendung von Ausgangsmaterial des Einkristalls , das ist optisch isotrop oder optisch einachsige, und das umfasst optisch aktive Zentren von seltenen Erden gebildet Ionen und / oder Übergangsmetalle, die den Konzentrationsgradienten (4) zumindest in Richtung des Kristallwachstums aufweisen.

7. Ein zusammengesetztes optisches Material umfasst mindestens ein Paar von aktiven optischen Elementen , (D1 , D2) mit dem Konzentrationsgefälle (4) der optisch aktiver Elemente nach Patentanspruch 1; einzelne Elemente des Paares werden um eine gemeinsame Achse senkrecht zur Richtung eines Konzentrationsgradienten (4) von optisch aktiven Zentren um 180 ° gegeneinander gedreht und anschließend optisch verbunden.

8. Das zusammengesetzte optische Material nach Patentanspruch 7, wobei für den verwendet die Produktion von aktiven optischen Elementen (D1 , D2), großen Laser Brammen in Besonderen.

9. Das Verfahren optischen Verbundmaterial zur Herstellung nach Patentanspruch 4 bei dem mindestens eines der Elemente mindestens eines Paares aktiver optischer Elemente (D1, D2) mit dem Konzentrationsgradienten (4) optisch aktiver Zentren nach Anspruch 1 gegen das zweite Element des Paares entlang einer gemeinsamen, zur Richtung des Konzentrationsgradienten (4) optisch aktiver Zentren senkrechten Achse um 180° gedreht wird und die beiden Komponenten (D1, D2) mindestens eines Paares dann optisch verbunden werden.

10. Ein aktives optisches Element mit einer Festkörper-aktiven Medium umfasst mindestens ein Paar von aktiven optischen Elementen , (D1 , D2) nach Patentanspruch 1 , die geometrisch zentrosymmetrisch oder spiegelnd angeordnet sind, wobei die Summe der Werte der Konzentrationsgradienten (4) optisch aktiver Zentren dieses mindestens einen Paares aktiver optischer Elemente (D1, D2) in Richtung mindestens eines durchgehenden optischen Strahls (5) an allen Punkten des Querschnitts dieses Strahls (5) in einem Intervall bis zu ±5% der optischen Homogenität liegt.

11. Das aktive optische Element nach Patentanspruch 10 , die die Elemente an einem Paar von aktiven optischen Elementen dest, (D1, D2) nach Patentanspruch 1 die gegenseitig drehbar um die Normale der entsprechenden Flächen derart schwenkbar sind, dass die Konzentrationsgradienten (4) der optisch aktiven Zentren entgegengesetzt und gleichzeitig in Richtung mindestens eines durchgehenden optischen Strahls (5) hintereinander angeordnet sind, so dass die Lage der gemeinsamen Drehachse der beiden Elemente aus mindestens einem Paar aktiver optischer Elemente (D1, D2) nach Anspruch 1 erhalten bleibt.

12. Das aktive optische Element nach Patentanspruch 10 , die die Elemente an einem Paar von aktiven optischen dest Elementen , (D1 , D2) nach Patentanspruch 1 geometrisch angeordnet bilden einen rechten Winkel, während es zumindest einen optischen Weitergabe Balken (5) an seinem Eintritt in mindestens ein Paar der so geometrisch angeordneten Paarelemente , die parallel zur geometrischen Achse des Winkels ausgerichtet sind , der durch diese Elemente (D1 , D2) gebildet wird.

13. Das aktive optische Element nach Patentanspruch 10 , die Elemente aus einem mit zumindest Paar von aktiven optischen Elemente , (D1 , D2) nach 1 geometrisch so angeordnet sind , **dadurch gekennzeichnet, dass** die Normalen der entsprechenden Bereiche einander im wesentlichen parallel sind, und Mindestens ein durchstrahlender optischer Strahl (5) ist auf eine der Oberflächen gerichtet, deren Normalen in einem Winkel parallel sind, der im Intervall von 22 ° bis 75 ° zur Normalen jeder Oberfläche liegt.

14. Das aktive optische Element nach Patentanspruch 13 mit zumindest einem Übergang optischen Strahls (5) ausgerichtet gegen mindestens ein von den Elementflächen von zumindest ein Paar von aktiven optischen Elementen (D1 , D2) nach Patentanspruch 1 , wobei Normale parallel und sind voneinander entfernt, unter dem Brewster gerichteter Winkel, so allmählich durch das Volumen vorbei von den beiden Elementen dieser zumindest ein Paar von aktiven optischen Elementen (D1 , D2).

15. a Das aktive optische Element gemäß jeder der Ansprüche 10 bis 14 ist ein Teil des optischen Laserverstärker und / oder sättigbaren Absorber und / oder Strahlungsdetektor.

## Revendications

1. Paire d' éléments optiques actifs (D1 , D2) dans laquelle chacun des éléments de paire a un gradient de concentration (4) de centres optiquement actifs sur un niveau acceptable d'homogénéité optique, dans lequel le gradient de concentration (4) est parallèle à une surface de l'élément optique configurée pour transmettre et / ou réfléchir un faisceau optique (5); et lesdits éléments (D1 , D2) sont mutuellement miroir et / ou en rotation symétrique dans la forme et dans la répartition du gradient de concentration (4) des centres optiquement actifs au moins dans la surface et / ou le volume destiné à la réflexion et / ou au passage d'un faisceau optique (5), dans lequel lors de la réflexion au niveau des éléments pair et / ou du passage à travers les éléments de la paire, le faisceau optique (5) est dirigée telle que la somme des optiquement actifs des centres de la paire des éléments à travers la section transversale du faisceau optique atteint une concentration maximale différence de ± 5% en tous points de la croix section du faisceau optique résultant en un niveau acceptable d' homogénéité optique .

2. La paire de actives optiques des éléments (D1 , D2) en fonction de la revendication 1, utilisé pour préparer un matériau composite avec une inhomogénéité éliminé de la concentration des centres optiquement actif.

3. La paire de actives optiques des éléments (D1 , D2) en fonction de la revendication 1, étant utilisé en tant que milieu actif à l'état solide de l'élément optique destiné à l'amplification et / ou de détection et / ou le contrôle de l'optique rayonnement (5).

4. Un procédé pour la préparation de la paire d' actifs optiques des éléments (D1 , D2) selon la revendication 1, en utilisant un matériau de départ pour leur production, qui comprend au moins une zone de miroir et / ou une concentration symétrique en rotation gradient (4) des optiquement actifs des centres par au moins un axe (2) tout en ayant allonge cet au moins un axe (2) le processus de changement le gradient de concentration (4) des centres optiquement actifs , et par conséquent , la préparation réside dans le fait que le matériau de départ est réduit en direction de l'axe de symétrie (2) du gradient de concentration (4) des centres optiquement actifs à la longueur souhaitée et équipé d' extrémités d' inspection (1); miroir et / ou en rotation symétriques parties ayant optique homogénéité sont sélectionnés à partir du volume du matériau ainsi traité; au moins deux géométriques des formes satisfaisant à la situation de miroir et / ou une symétrie de rotation sont réalisés par au moins trois mutuellement parallèles sections (3) dirigés dans une direction parallèle à la s axe symétrie (2), dans lequel un moyen pour l'article , ou une médiane plane entre les moyennes des sections (3) représente la géométrie lieu du miroir et / ou une symétrie de rotation de la matière de départ que bien que la moyenne section ou les sections représentent le géométrique lieu du miroir et / ou la symétrie de rotation; et les dimensions et la surface des formes géométriques ainsi réalisées sont ensuite ajustées tout en maintenant la condition de symétrie mutuelle selon la revendication 1.

5. Le procédé de préparation de la paire d' actifs optiques des éléments (D1 , D2) en fonction de la revendication 4, en utilisant comme au départ matériau un monocristal produit par le procédé de u ni direction al cristallisation à partir d'une masse fondue ou d'une solution ayant une concentration gradient (4) dans le sens de la croissance monocristalline .

6. Le procédé pour la préparation de la paire d' actifs optiques des éléments (D1 , D2) selon la revendication 5, en utilisant comme produit de départ le monocristal qui est optiquement isotrope ou optiquement uniaxial, et qui comprend optiquement actifs des centres formés par des terres rares des ions et / ou des métaux de transition présentant le gradient de concentration (4) au moins dans le sens de la croissance cristalline .

7. Un composite optiques matériau comprend au moins une paire d' actifs optiques éléments , (D1 , D2) avec la concentration de gradient (4) optiquement actives des éléments selon à revendication 1; les éléments individuels de la paire sont mutuellement tournés de 180 ° par un axe commun perpendiculaire à la direction d'un gradient de concentration (4) de centres optiquement actifs et ensuite connectés optiquement.

8. Matériau optique composite selon la revendication 7, utilisé pour la production d' éléments optiques actifs (D1 , D2), notamment de grandes plaques laser.

9. Le procédé de préparation du matériau optique composite selon la revendication 4 ayant au moins un des éléments d'au moins une paire de actives optiques des éléments (D1 , D2) avec le gradient de concentration (4) optiquement centres actifs selon la revendication 1, tourné contre le deuxième élément de la paire le long d'un axe commun perpendiculaire à la direction du gradient de concentration (4) des centres optiquement actifs de 180 ° et les deux composantes (D1 , D2) d'au moins une paire sont alors optiquement connecté.

10. Un élément optique actif avec un comprend milieu actif solide à l' état d'au moins une paire d'éléments optiques actifs , (D1 , D2) selon la revendication 1 qui sont géométriquement agencé centrosymétrique, ou miroir, tandis que la somme de la valeur de la concentration des gradients (4) de centres optiquement actifs de cette au moins une paire d'optiques actives des éléments ( D1 , D2) est dans la direction d'au moins une passe faisceau optique (5) à tous les points dans la section transversale de cette poutre (5) à un intervalle allant jusqu'à ± 5% d' homogénéité optique .

11. L'élément optique actif selon à revendication 10 comportant les éléments d'au moins une paire d'éléments optiques actifs , (D1 , D2) selon la revendication 1 mutuellement pourriture pivoté en rotation autour de la normale des surfaces correspondantes de telle sorte que les concentrations de gradients ( 4) des optiquement actives centres sont inversement et disposé simultanément dans la direction d'au moins un passage faisceau optique (5) derrière l'autre de sorte que l'emplacement de rotation axe commun des deux éléments à partir d' au moins une paire d'optiques actives des éléments (D1, D2) selon la revendication 1 est maintenu.

12. L'élément optique actif selon à revendication 10 comportant les éléments d'au moins une paire d'optiques actifs éléments , (D1 , D2) selon la revendication 1 agencé géométriquement pour former un bon angle, alors qu'il y a au moins une passage optique poutre (5) à son entrée à au moins une paire d' éléments de paire ainsi disposés géométriquement orientés parallèlement à l'axe géométrique de l'angle formé par ces éléments (D1 , D2).

13. L'op actif élément tical selon la revendication 10 comportant les éléments d'au moins une paire de actives optiques éléments , (D1 , D2) selon la revendication 1 disposés géométriquement de telle sorte que les normales des zones correspondantes sont mutuellement parallèles en général, et au moins un faisceau optique passant (5) est orienté vers l'une des surfaces dont les normales sont parallèles selon un angle compris dans l'intervalle de 22 ° à 75 ° par rapport à la normale de chaque surface.

14. L' activité optique élément selon à revendication 13 , comportant au moins un passage faisceau optique (5) orienté contre au moins un de l' élément surfaces d'au moins une paire de actives optiques des éléments (D1 , D2) selon la revendication 1 , dans lequel les normales sont parallèles et sont écartées, sous l'angle de Brewster , traversant ainsi progressivement le volume des deux éléments de cette au moins une paire d'éléments optiques actifs (D1 , D2).

15. L' élément optique actif selon l'une quelconque des revendications 10 à 14 faisant partie de l'amplificateur laser optique et / ou absorbeur saturable et / ou détecteur de rayonnement.
